# EUROPEAN PATENT APPLICATION

(11) **EP 1 683 995 A1**
(43) Date of publication of application: **26.07.2006**
(21) Application number: 06100640.9
(22) Date of filing: 20.01.2006
(51) Int. Cl.: F16K 31/34

(54) **Length-adjustable, float-controlled fill tap for a flush tank**

(30) Priority: 21.01.2005 IT MI20050080
(71) Applicant: Oliveira & Irmao S.A., 3800 Aveiro (PT)
(72) Inventor: Moura de Oliveira, Antonio Manuel, 3800-25, Aveiro (PT)
(74) Representative: Jorio, Paolo

(57) **Abstract**

A length adjustable, float-controlled fill tap (1) for a flush tank has a valve assembly (5) controlled by a float assembly (6) and interposed between an inlet conduit (7), connectable to a water mains, and an outlet conduit (8); the inlet conduit (7) and the outlet conduit (8) are substantially coaxial, and are both telescopic and length-adjustable simultaneously by a single adjusting mechanism (36).

## Description

The present invention relates to a length-adjustable, float-controlled fill tap for a sanitary fixture flush tank, and which is particularly suitable for up-fill applications, i.e. from the bottom of the tank.

As is known, a sanitary fixture flush tank has a fill tap connected to the water mains to fill the tank after each flush; and cutoff of the incoming water is controlled by a float which, on reaching a predetermined level inside the tank, closes a valve on the fill tap.

The fill tap is normally housed inside the tank, and is connected to the water mains by an inlet conduit which, depending on requirements, extends through a lateral wall or bottom wall of the tank.

A major drawback, particularly of up-fill taps, lies in the inlet conduit being of predetermined fixed length which cannot be adapted to the size of the tank and/or the water level inside the tank.

It is an object of the present invention to provide a float-controlled fill tap designed to eliminate the aforementioned drawback. More specifically, it is an object of the invention to provide a fill tap designed to permit fast, easy length adjustment of the inlet conduit, and which at the same time is cheap and easy to produce and install.

According to the present invention, there is provided a length adjustable, float-controlled fill tap for a flush tank, comprising a valve assembly controlled by a float assembly and interposed between an inlet conduit, connectable to a water mains, and an outlet conduit; the fill tap being characterized in that the inlet conduit is telescopic.

The fill tap according to the invention provides for fast, easy length adjustment of the inlet conduit, to adapt the length of the inlet conduit to the size of the tank and/or the water level inside the tank, and is also cheap and easy to produce and install.

A non-limiting embodiment of the present invention will be described by way of example with reference to the accompanying drawings, in which:
Figures 1 and 2 show a partly sectioned side view and a front view respectively of a fill tap in accordance with the invention and in different positions;
Figure 3 shows a larger-scale, partly sectioned side view of a top portion of the Figure 1 fill tap;
Figure 4 shows a larger-scale, partly sectioned side view of a detail of the Figure 1 tap;
Figure 5 shows a cross section of the Figure 4 detail;
Figures 6 and 7 show a front view and a longitudinal section respectively of the Figure 4 detail in a different position;
Figure 8 shows the Figure 4 detail in a further position;
Figure 9 shows a cross section of the Figure 8 detail.

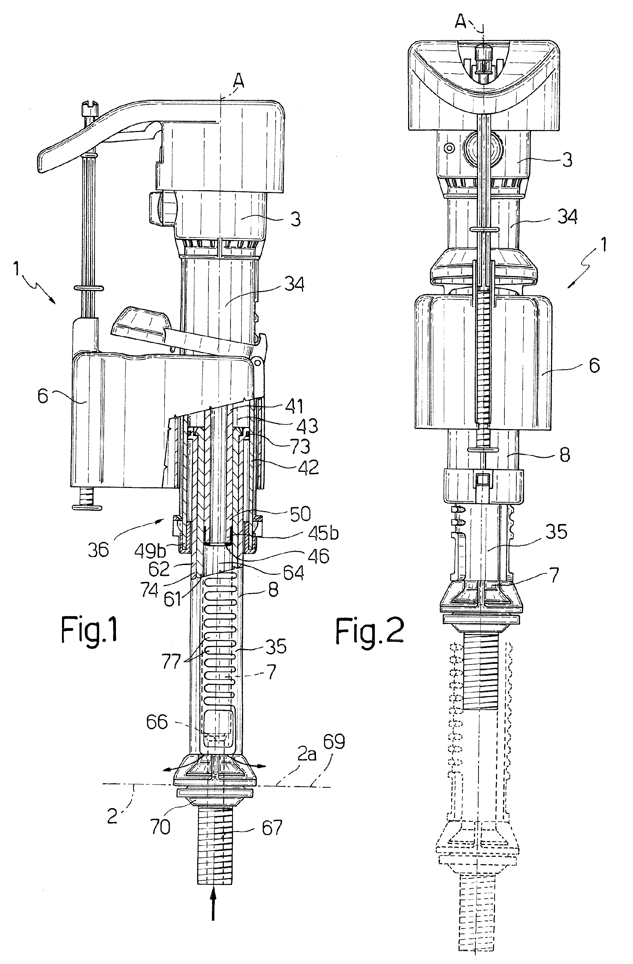

Number 1 in Figures 1 to 3 indicates as a whole a float-controlled fill tap, in particular an up-fill tap, for a known flush tank 2 (only shown schematically) of a sanitary fixture. Fill tap 1 is housed inside a vessel 2a of tank 2, and comprises a body 3 having an inner cavity 4 housing a valve assembly 5 controlled by a float assembly 6; an inlet conduit 7 downstream from valve assembly 5 and connectable to a water mains to supply water to valve assembly 5; and an outlet conduit 8 upstream from valve assembly 5, and by which the water flowing through valve assembly 5 is fed into tank 2.

Inlet conduit 7 and outlet conduit 8 are substantially straight and parallel and, in particular, are substantially coaxial along an axis A.

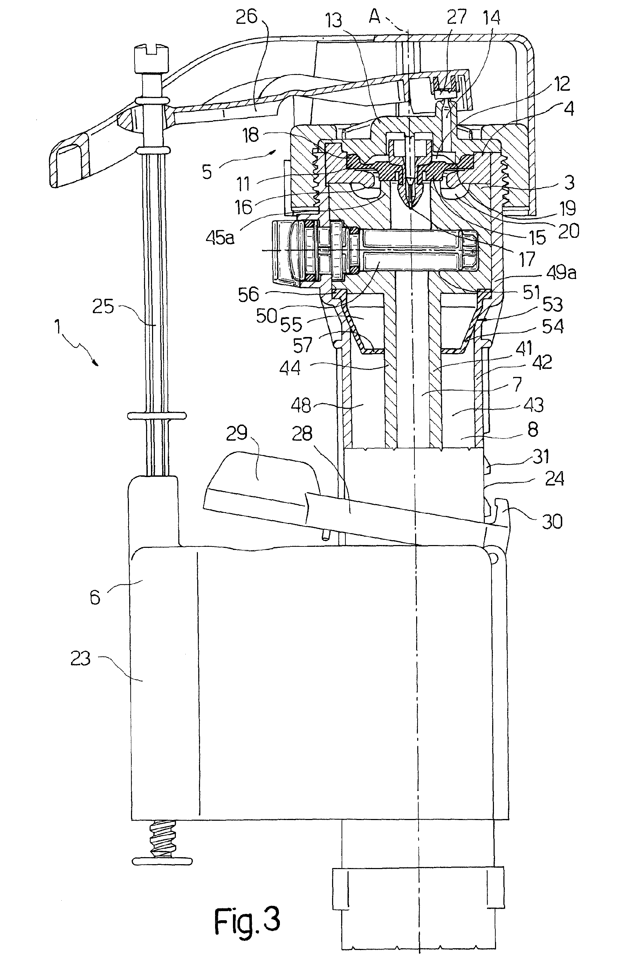

As shown in Figure 3, valve assembly 5 is a substantially known counterpressure valve assembly, and comprises an elastically deformable, disk-shaped diaphragm 11; and a counterpressure chamber 12 formed in cavity 4, between diaphragm 11 and a wall 13 of body 3. Wall 13 has a through relief nozzle 14 connecting counterpressure chamber 12 to the outside of body 3. Diaphragm 11 comprises an annular central portion 15, which cooperates in fluidtight manner with an end edge 16 of inlet conduit 7, and is fitted through centrally with a pin member 17; a radially outer, peripheral edge 18 inserted in fluidtight manner inside a groove formed in wall 13; and a hinge portion 19 connecting central portion 15 to peripheral edge 18 and interposed between counterpressure chamber 12 and an annular conduit 20.

As in a known solution described in EP-A-1270830, float assembly 6 comprises a main float 23 fitted in axially sliding manner to the outside of a guide member 24 and connected mechanically by an adjustable rod 25 to a lever 26 having a shutter 27 which cooperates with nozzle 14 to control operation of valve assembly 5; and a rocking member 28 hinged to float 23 and having an auxiliary float 29, and a hook 30 which cooperates with a number of teeth 31 on guide member 24 to selectively connect-disconnect float 23 and guide member 24 as the water level in tank 2 varies.

Body 3 is fitted integrally with a first member 34 extending along axis A (substantially vertical in use); a second member 35 connected telescopically to member 34 along axis A; and an adjusting mechanism 36 for adjusting the position of member 35 with respect to member 34 along axis A. More specifically, member 35 slides along axis A with respect to member 34, and is locked to member 34 by rotation about axis A, as explained below.

Member 34 comprises two coaxial tubes 41, 42 separated radially by an annular gap 43.

The radially inner tube 41 defines a top portion 44, integral with body 3, of inlet conduit 7, and has a top end 45a for attachment to body 3 (Figure 3), and a free bottom end 45b (Figure 1); end 45a terminates with end edge 16 cooperating with diaphragm 11 of valve assembly 5; and end 45b is fitted with a radial sealing ring 46.

Radially outer tube 42 defines a top portion 48, integral with body 3, of outlet conduit 8, has an outer lateral surface also defining guide member 24 for guiding float 23 (Figure 3), and comprises a top end 49a for attachment to body 3 (Figure 3), and a free bottom end 49b (Figure 1). Portion 48 is connected to annular conduit 20 by a channel (not shown) formed in body 3.

A filter 50 is housed removably inside a seat 51 formed in body 3, and is located upstream from valve assembly 5 along inlet conduit 7.

A non-return valve 53 is fitted, downstream from valve assembly 5, to outlet conduit 8 - more specifically, at end 49a - to prevent backflow of water from outlet conduit 8 to valve assembly 5. More specifically, valve 53 comprises an elastically deformable, substantially cup-shaped membrane 54 defining a cavity 55 facing valve assembly 5, i.e. facing the direction from which water flows from valve assembly 5. Membrane 54, at one axial end, has a peripheral fastening edge 56 fixed to an inner wall of tube 42, and, at the opposite axial end, has a ring 57 having a central hole and fixed about tube 41.

Member 35 slides along axis A inside annular gap 43, and in turn comprises two coaxial tubes 61, 62 connected integrally to each other and one inserted inside the other.

The radially inner tube 61 defines a bottom portion 64, movable with respect to body 3, of inlet conduit 7; a bottom end 66 of tube 61 is fitted with a fitting 67 for connection to the water mains and inserted through a hole in a bottom wall 69 of tank 2, and with a ring nut 70 for assembly to wall 69; and tube 61 is fitted to the outside of tube 41, with sealing ring 46 interposed between tube 41 and tube 61 (Figure 1).

The radially outer tube 62 is secured axially to tube 61, e.g. between two opposite shoulders on tube 61; and a top end of tube 62 is fitted with a radial sealing ring 73 cooperating with the inner surface of tube 42.

Tubes 61, 62 are connected axially integral with each other, and with a radial clearance defining a water flow conduit, in turn defining a bottom portion 74, movable with respect to body 3, of outlet conduit 8. Both tubes 61, 62 are housed with respective top portions inside annular gap 43, and slide integrally along axis A inside annular gap 43.

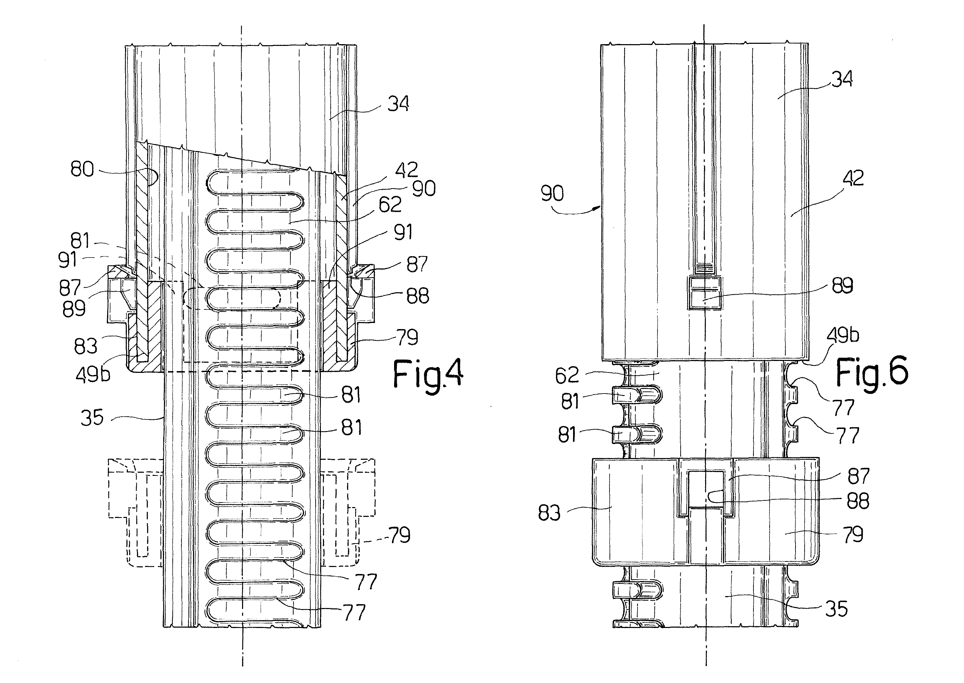

With reference to Figures 4 to 9, adjusting mechanism 36 comprises at least one number of seats 77 spaced axially along axis A; at least one tooth 78 for selectively engaging one of seats 77 by rotating member 34 circumferentially about axis A with respect to member 35; and a lock member 79 for preventing rotation between member 34 and member 35.

More specifically, adjusting mechanism 36 comprises two diametrically opposite teeth 78 projecting radially inwards towards each other from an inner lateral surface 80 of tube 42; and two diametrically opposite sets of transverse circumferential projections 81 projecting radially outwards from an outer lateral surface 82 of tube 62. Projections 81 in the two sets are aligned and spaced apart in a direction parallel to axis A; and respective numbers of seats 77, for engagement by teeth 78, are defined between projections 81 of the two sets.

Lock member 79 comprises a collar 83 fitted radially loosely about tube 62, and having a bottom wall 84, in which is formed a through hole 85 in which tube 62 is inserted, and a substantially cylindrical lateral wall 86. Collar 83 is fitted with two diametrically opposite, elastically deformable retaining members 87 having respective eyelets 88.

End 49b of tube 42 is fitted with two diametrically opposite, radially outer latches 89 projecting from an outer lateral surface 90 of tube 42 and spaced 90° apart from teeth 78 to engage eyelets 88 and so connect collar 83 to tube 42 and, therefore, to member 34.

Collar 83 also comprises two inner stop members 91 which cooperate with projections 81 to prevent projections 81 from rotating integrally with tube 62, and so preventing member 34 from rotating with respect to member 35, once collar 83 is connected angularly integral with member 35.

Both inlet conduit 7 and outlet conduit 8 are therefore telescopic, and are both length-adjustable simultaneously by adjusting mechanism 36. When installing fill tap 1 in tank 2, the length of inlet conduit 7 and outlet conduit 8 is adjusted as follows.

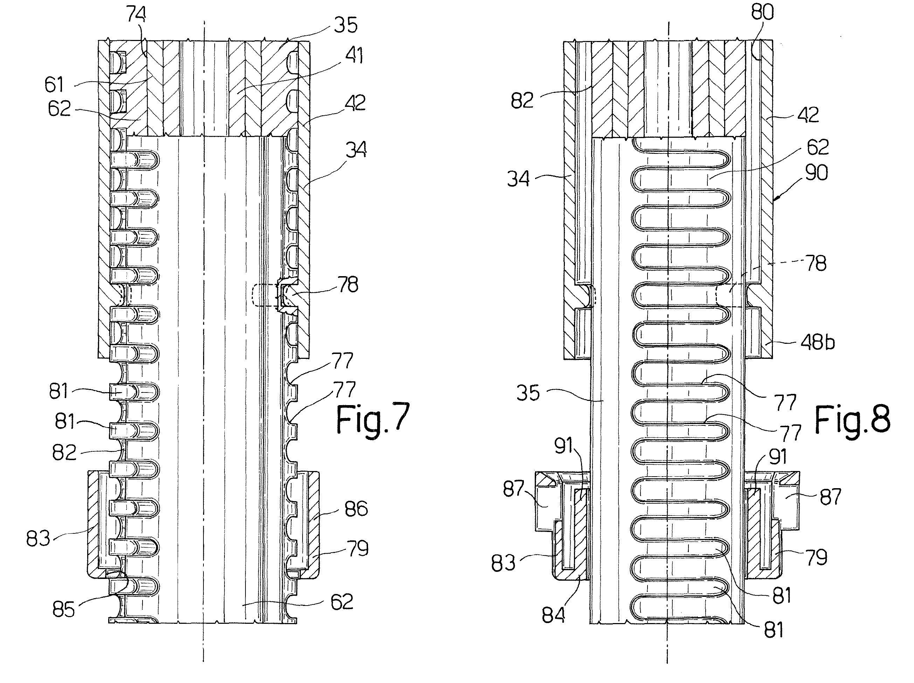

As shown in Figure 6, lock member 79 is initially released from member 34 : collar 83 is fitted about tube 62, and retaining members 87 do not engage latches 89.

To adjust the length of inlet conduit 7 and outlet conduit 8, member 34 is moved along axis A with respect to member 35. To enable member 34 to slide with respect to member 35, members 34, 35 are rotated with respect to each other to position teeth 78 laterally with respect to projections 81, and therefore clear of seats 77, as shown in Figures 8 and 9.

Once member 34 is positioned as required with respect to member 35, member 35 is rotated roughly 90° about axis A with respect to member 34, so that teeth 78 engage a selected pair of seats 77, as shown in Figure 7. At this point, members 34, 35 are axially integral along axis A, but can be rotated about axis A.

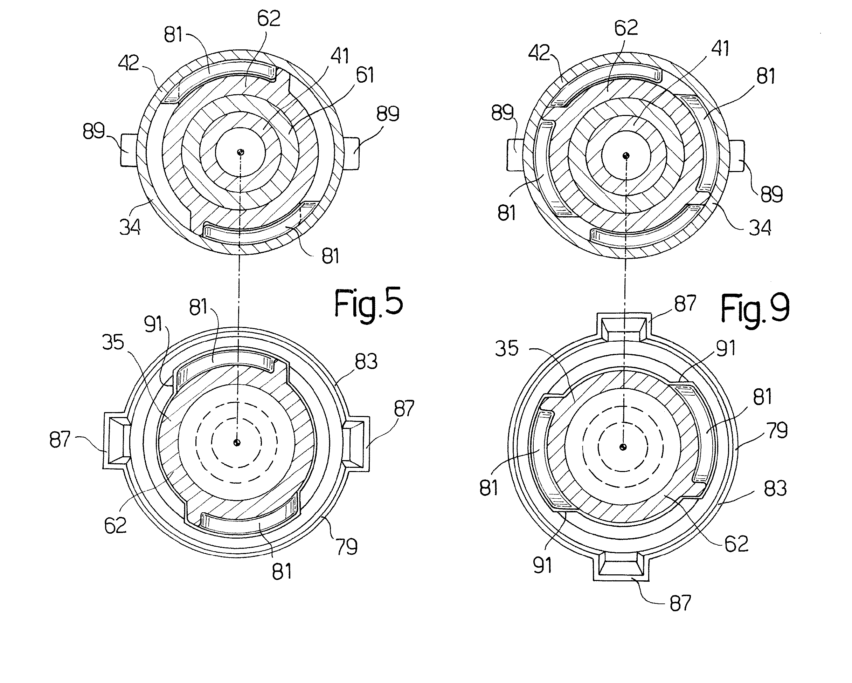

Lock member 79 is then set to engage member 34, by sliding collar 83 so that retaining members 87 engage latches 89. In this position, shown in Figures 4 and 5, stop members 91 rest circumferentially against respective projections 81 to prevent member 34 from rotating with respect to member 35 about axis A, and so connect members 34, 35 angularly integral with each other.

Once installed, fill tap 1 operates in the same way as similar known fill taps with counterpressure valve assemblies. Briefly, when the water is drained from tank 2, float assembly 6 opens nozzle 14, and the mains water pressure in inlet conduit 7 deforms hinge portion 19 of diaphragm 11; water therefore flows from inlet conduit 7 into annular conduit 20, and from there into outlet conduit 8 (first flowing along portion 48 between tubes 41, 42, and then along portion 74 between tubes 61, 62) and out through the open bottom end of portion 74 to fill tank 2. Once tank 2 is filled, float assembly 6 closes nozzle 14 to cut off the water supply.

Clearly, changes may be made to the fill tap as described and illustrated herein without, however, departing from the scope of the accompanying Claims.

## Claims

1. A length adjustable, float-controlled fill tap (1) for a flush tank, comprising a valve assembly (5) controlled by a float assembly (6) and interposed between an inlet conduit (7), connectable to a water mains, and an outlet conduit (8); the fill tap being **characterized in that** the inlet conduit (7) is telescopic.

2. A fill tap as claimed in Claim 1, **characterized in that** the inlet conduit (7) and the outlet conduit (8) are substantially coaxial.

3. A fill tap as claimed in Claim 1 or 2, **characterized in that** the inlet conduit (7) and the outlet conduit (8) are both telescopic.

4. A fill tap as claimed in Claim 3, **characterized in that** the inlet conduit (7) and the outlet conduit (8) are both length-adjustable simultaneously by a single adjusting mechanism (36).

5. A fill tap as claimed in one of the foregoing Claims, **characterized by** comprising a body (3) housing the valve assembly (5); a first member (34) fitted integrally to said body; a second member (35) connected telescopically to the first member (34); and an adjusting mechanism (36) for adjusting the position of the first member with respect to the second member.

6. A fill tap as claimed in Claim 5, **characterized in that** the second member (35) slides along an axis (A) with respect to the first member (34), and is locked to the first member (34) by rotation about said axis (A).

7. A fill tap as claimed in Claim 6, **characterized in that** the adjusting mechanism (36) comprises a lock member (79) for engaging the first member (34), and which cooperates with the second member (35) to prevent rotation of the second member (35) with respect to the first member (34).

8. A fill tap as claimed in Claim 6 or 7, **characterized in that** the adjusting mechanism (36) comprises at least one number of seats (77) spaced axially along said axis (A); at least one tooth (78) for selectively engaging one of the seats (77) by rotating the first member (34) about said axis (A) with respect to the second member (35); and a lock member (79) for preventing rotation of the tooth (78) with respect to the seats (77).

9. A fill tap as claimed in Claim 8, **characterized by** comprising retaining members (87) for securing the lock member (79) angularly integral with the first member (34); and stop members (91) carried by the lock member (79) and cooperating with corresponding projections (81), carried by the second member (35), to prevent rotation of the second member (35) with respect to the first member (34) once the lock member (79) is secured angularly integral with the first member (34).

10. A fill tap as claimed in one of the foregoing Claims, **characterized by** comprising a non-return valve (53) fitted, downstream from the valve assembly (5), to the outlet conduit (8) to prevent backflow of water from the outlet conduit (8) to the valve assembly (5).

11. A fill tap as claimed in the foregoing Claim, **characterized in that** the non-return valve (53) comprises an elastically deformable membrane (54).

12. A flush tank (2) comprising a vessel (2a) and a float-controlled fill tap (1), **characterized in that** the fill tap is a fill tap as claimed in any one of the foregoing Claims.

13. A flush tank as claimed in the foregoing Claim, **characterized in that** the inlet conduit (7) of the fill tap (1) extends substantially vertically from a bottom wall (69) of the tank (2).
